# EUROPÄISCHE PATENTSCHRIFT

(11) **EP 4 092 641 B1**
(45) Veröffentlichungstag und Bekanntmachung des Hinweises auf die Patenterteilung: **21.08.2024**
(21) Anmeldenummer: 21175073.2
(22) Anmeldetag: 20.05.2021
(51) Int. Cl.: G08B 13/12, B60R 25/00, G08B 13/14, B62D 33/04

(54) **KOFFERAUFBAU FÜR EIN NUTZFAHRZEUG UND VERFAHREN ZUR HERSTELLUNG EINES FLÄCHENELEMENTS FÜR EINEN SOLCHEN KOFFERAUFBAU**
LUGGAGE STRUCTURE FOR A COMMERCIAL VEHICLE AND METHOD FOR MANUFACTURING A FLAT ELEMENT FOR SUCH A LUGGAGE STRUCTURE
COFFRE POUR UN VÉHICULE UTILITAIRE ET PROCÉDÉ DE FABRICATION D'UN ÉLÉMENT DE SURFACE POUR UN TEL COFFRE

(43) Veröffentlichungstag der Anmeldung: 23.11.2022
(73) Patentinhaber: Schmitz Cargobull AG, 48341 Altenberge (DE)
(72) Erfinder: Beelmann, Reinhard, 45721 Haltern am See (DE); Derks, Roger Gerardus Christiaan, 5922 XT, Venlo (NL)
(74) Vertreter: Cohausz & Florack

(56) Entgegenhaltungen:
- EP-A1- 3 590 795
- EP-A1- 3 690 837
- EP-A2- 2 489 561
- US-A- 4 578 670
- US-A1- 2009 140 857

## Beschreibung

Die Erfindung betrifft einen Kofferaufbau für ein Nutzfahrzeug. Ein solcher Kofferaufbau umgrenzt einen Laderaum. Dazu weist der Kofferaufbau mindestens ein Flächenelement auf, das eine der Umgebung des Nutzfahrzeugs zugeordnete, äußere Decklage, eine dem Laderaum zugeordnete, innere Decklage und eine zwischen der äußeren und der inneren Decklage angeordnete Kernlage umfasst, die aus einem geschäumten Kunststoff gebildet ist.

Ebenso betrifft die Erfindung ein Verfahren zur Herstellung eines Flächenelements für einen solchen Kofferaufbau.

Bei Nutzfahrzeugen der hier in Rede stehenden Art handelt es sich typischerweise um konventionelle Lastkraftwagen, Anhänger für solche Lastkraftwagen oder um von einer Zugmaschine gezogene Satteltauflieger, in der Fachsprache auch "Trailer" genannt.

Die auf solchen Nutzfahrzeugen vorgesehenen Kofferaufbauten schützen das im Laderaum verstaute Gut gegen äußere Einflüsse. Dabei sind die Aufbauten in der Regel so konzipiert, dass sie das Transportgut nicht nur gegen Staub, Feuchtigkeit und desgleichen abschirmen, sondern auch thermisch gegenüber der Umgebung isolieren.

Beispiele für Nutzfahrzeuge, die für diese Zwecke eingerichtet sind, sind in der Broschüre "Die Kofferfahrzeuge - Das Produktprogramm", herausgegeben von der Anmelderin, Druckvermerk S.KO-COOL-BRO-DE1-9210-2518, beschrieben, die unter der URL http://https://www.cargobull.com/de/media-center/products#Kofferfahrzeuge zum Download bereitgestellt ist (Auffindedatum 23. März 2021). In dieser Broschüre, Seite 7, findet sich unter dem Stichwort "Ferroplast^{®} - einzigartig effizient" eine Beschreibung des Aufbaus der Flächenelemente, auf denen die Aufbauten der in der Broschüre beschriebenen Fahrzeuge basieren.

Bei den Flächenelementen, die den Laderaum umgeben, handelt es sich typischerweise um die Längswände, die Querwände und / oder das Dach des Kofferaufbaus. Das jeweilige Flächenelement kann dabei aus mehreren Paneelen zusammengesetzt sein, die jeweils aus einer typischerweise auf Basis einer Blechlage mehrschichtig aufgebauten inneren Decklage, einer geschäumten Kernlage und einer ebenfalls auf Basis einer Blechlage mehrschichtig aufgebauten äußeren Decklage bestehen, die der Umgebung des Kofferaufbaus zugeordnet ist.

Nutzfahrzeuge mit derartigen Kofferaufbauten werden für den Transport von temperaturempfindlichen Gütern auf öffentlichen Straßen eingesetzt. Bei solchen Nutzfahrzeugen handelt es sich typischerweise um Lastkraftwagen, Anhänger für Lastkraftwagen oder Sattelauflieger, die mit einer Zugmaschine einen Sattelzug bilden.

Der Diebstahl von Transportgütern aus Nutzfahrzeugen ist ein lang bekanntes Problem. Bei Nutzfahrzeugen mit Planenaufbauten werden die Plane von auf Parkplätzen oder in Städten abgestellten Fahrzeugen aufgeschnitten, um das im Laderaum befindliche Ladegut zu entwenden. Auch wenn Kofferaufbauten aufgrund ihrer festen Seitenwände und ihres festen Dachs grundsätzlich einen im Vergleich zu Planenaufbauten verbesserten Schutz vor Diebstahl bieten, werden diese ebenfalls immer wieder Opfer von Diebstahldelikten. So stellen temperaturempfindliche Pharmazeutika oder vergleichbar wertvolle Güter eine begehrte Beute dar, die regelmäßig in Nutzfahrzeugen mit temperierten Kofferaufbauten transportiert werden. Auch bei Kofferaufbauten wird bei einem Diebstahl üblicherweise versucht, die Seitenwände aufzuschneiden, um Zugang zum Laderaum zu bekommen.

Aus dem Stand der Technik sind verschiedene Systeme zur Sicherung des in einem Aufbau eines Nutzfahrzeugs verstauten Guts bekannt.

So kann bei Kofferaufbauten der hier in Rede stehenden Art wenigstens ein Flächenelement mit einem Diebstahlschutz ausgestattet sein, welcher mindestens eine Signalleitung umfasst. Diese Signalleitung ist mit einer Überwachungseinrichtung gekoppelt, die bei einer Beschädigung der Signalleitung einen Alarm auslöst.

Ein Beispiel für einen derartigen Diebstahlschutz ist in der DE 102 41 709 B4 beschrieben. Das dort vorgestellte Sicherungsverbundsystem für den Schutz von mobilen Gegenständen kann zur inneren Auskleidung eines zu schützenden Objektes verwendet werden. Das Sicherungsverbundsystem besteht dazu aus mindestens zwei leitfähigen Schichten aus einem optisch leitfähigen Material und mindestens einer zwischen den leitfähigen Schichten angeordneten nicht-leitfähigen Zwischenschicht. In eine der beiden optisch leitfähigen Schichten werden optische Signale beispielsweise mittels einer Leuchtdiode eingebracht. Die weitere optisch leitfähige Schicht ist mit einem optischen Sensor verbunden. Kommt es zu einer Beschädigung des Verbundsystems, wird die optisch nicht-leitfähige Schicht durchbrochen, wodurch Lichtsignale aus der mit der Strahlungsquelle versehenen optisch leitfähigen Schicht in die mit dem optischen Sensor ausgestatteten Schicht eindringen. Diese Lichtsignale werden mittels einer Erfassungseinheit detektiert, die wiederum mit einer Alarmauslöseeinheit in Verbindung steht, die bei Abweichung des mit der Erfassungseinheit kontrollierten Zustandes auslöst.

Ein weiteres Beispiel für einen Diebstahlschutz ist eine Alarmmatte, die in der WO 02/12671 A1 beschrieben ist. Diese Alarmmatte besteht aus lichtleitenden und/oder stromleitenden Fäden, die mit einer Überwachungseinrichtung verkoppelt sind, welche bei einer Beschädigung der Matte einen Alarm auslöst.

Aus der DE 10 2019 119 569 A1 ist ein weiteres System zur Erfassung eines Einschnitts in eine Plane oder in eine Wand eines Fahrzeugs bekannt. Das System umfasst ein elektrisch leitfähiges Klebeband, eine damit verbundene Leiterplatte und eine daran angekoppelte Auswerteeinheit. Das elektrisch leitfähige Klebeband kann an einer Innenseite einer Plane eines Lastkraftwagens angebracht werden. Wird beim Aufschlitzen der Plane das Klebeband durchtrennt, so registriert die Auswerteeinheit eine Spannungsänderung und löst einen Alarm aus.

Des Weiteren ist in der EP 2 489 561 B1 eine elastische Abdeckplane zum Bedecken von Gütern mit einem elektronischen Manipulationserfassungskreislauf beschrieben. Derartige Abdeckplanen können als Plane von Planenaufbauten eines LKWs oder zur Abdeckung von Eisenbahnwaggons eingesetzt werden. Auf die Plane ist ein elektrisch leitender Pfad mittels einer Druck- oder Sprühtechnik aufgebracht, der mit elektronischen Messmitteln verbunden ist. Wird der elektrisch leitfähige Pfad beschädigt, wird dies durch die Messmittel detektiert und ein Alarm ausgelöst.

Aus der WO 2018/149458 A1 ist ein Alarmsystem bekannt, das auf einem Trägermaterial aufbaut, das einen Alarmdraht trägt. Hierzu ist der Alarmdraht über mehrere Fixierelement auf dem Trägermaterial gehalten. Das Trägermaterial kann auf einer Plane eines Lastkraftwagens flächig aufgebracht werden, um die im Laderaum befindlichen Güter zu sichern. Bei Beschädigung des Alarmdrahts wird ein elektrisches Signal an eine Steuer- und Überwachungseinrichtung abgegeben, die daraufhin einen Alarm auslöst.

Die voranstehend beschriebenen Vorrichtungen sind speziell für Planenaufbauten für Lastkraftwagen konzipiert. Jedoch ist versucht worden, derartige planenartige Vorrichtungen auch für den Diebstahlschutz von Kofferaufbauten zu verwenden. Dazu sind die dem Laderaum zugewandten Seiten der jeweils inneren Decklage der Längswände oder der Türen des Kofferaufbaus über eine bestimmte Höhe mit einer Plane oder einem Gewebe belegt worden, das eine Signalleitung trägt, die mit einem Alarmsystem verkoppelt ist (siehe Artikel "Sioen/Wabco. Intelligente Plane schützt Auflieger vor Diebstahl", https://logistra.de/news/nfz-fuhrpark-lagerlogistik-intralogistik-sioenwabco-intelligente-plane-schuetzt-auflieger-vor-diebstahl-49751.html, Auffindedatum 26. März 2021).

EP3590795 A1 offenbart einen Kofferaufbau mit zweischaligen Paneelen, die eine äußere und eine innere, strukturgebende Decklage aufweisen. Dazu weisen die Paneele eine dazwischen vorgesehene Kernlage auf, die typischerweise aus einem geschäumten Kunststoff besteht.

EP2489561 A2 und EP3690837 A1 offenbaren einen Planenaufbau für ein Nutzfahrzeug, bei dem die Seitenwände und das Dach durch eine Plane gebildet sind. Die Seitenwände sind mit einem Diebstahlschutz ausgestattet, der eine Signalleitung umfasst, die mit einer Überwachungseinrichtung gekoppelt ist. Diese löst bei einer Beschädigung der Signalleitung einen Alarm aus.

Vor dem Hintergrund des voranstehend erläuterten Standes der Technik hat sich die Aufgabe ergeben, einen Kofferaufbau mit einem verbesserten Diebstahlschutz zu schaffen, bei dem die Gefahr einer Beschädigung oder gezielten Manipulation der für den Diebstahlschutz vorgesehenen Einrichtung minimiert ist.

Die Erfindung hat diese Aufgabe durch einen Kofferaufbau gelöst, der mindestens die in Anspruch 1 angegebenen Merkmale besitzt.

Auch sollte die Erfindung ein Verfahren angeben, das es erlaubt, Flächenelemente für einen derartigen Kofferaufbau herzustellen, die für einen Diebstahlschutz optimal konfiguriert sind.

Ein die voranstehend genannte Aufgabe erfindungsgemäß lösendes Verfahren ist in Anspruch 11 angegeben.

Vorteilhafte Ausgestaltungen der Erfindung sind in den abhängigen Ansprüchen angegeben und werden wie der allgemeine Erfindungsgedanke nachfolgend im Einzelnen erläutert.

In Übereinstimmung mit dem Stand der Technik umgrenzt ein erfindungsgemäßer Kofferaufbau für ein Nutzfahrzeug einen Laderaum mit wenigstens einem Flächenelement, das eine der Umgebung des Nutzfahrzeugs zugeordnete, äußere Decklage, eine dem Laderaum zugeordnete, innere Decklage und eine zwischen der äußeren und der inneren Decklage angeordnete Kernlage, die aus einem geschäumten Kunststoff gebildet ist, umfasst, wobei das wenigstens eine Flächenelement mit einem Diebstahlschutz ausgestattet ist, welcher mindestens eine Signalleitung umfasst, die mit einer Überwachungseinrichtung gekoppelt ist, die bei einer Beschädigung der Signalleitung einen Alarm auslöst.

Erfindungsgemäß ist nun die mindestens eine Signalleitung von einem Gitter getragen und das die Signalleitung tragende Gitter mit der Kernlage zwischen der äußeren und der inneren Decklage des Flächenelements angeordnet.

Bei einem erfindungsgemäßen Verfahren zur Herstellung eines Flächenelements für einen gemäß einem der voranstehenden Ansprüche ausgebildeten Kofferaufbau, wobei das Flächenelement eine äußere, im Gebrauch der Umgebung des Kofferaufbaus zugeordnete Decklage, eine im Gebrauch einem vom Kofferaufbau umgrenzten Laderaum zugeordnete innere Decklage und eine zwischen den Decklagen vorhandene Kernlage umfasst, die aus einem geschäumten Kunststoff besteht, sind in entsprechender Weise folgende Schritte vorgesehen:
a) Bereitstellen eines eine Signalleitung tragenden Gitters;
b) Bereitstellen einer Decklage;
c) optionales Anordnen von wenigstens einem Fixierelement auf der beim fertigen Flächenelement der Kernlage zugeordneten Innenfläche der bereitgestellten Decklage;
d) Auflegen des die Signalleitung tragenden Gitters auf der beim fertigen Flächenelement der Kernlage zugeordneten Innenfläche der bereitgestellten Decklage;
e) optionales Ablängen des Gitters auf eine Solllänge;
f) Anordnen einer zweiten Decklage in einem Abstand zur zuvor bereitgestellten und mit dem die Signalleitung tragenden Gitter versehenen Decklage, so dass das die Signalleitung tragende Gitter in dem seitlich durch die Decklagen begrenzten Raum angeordnet ist;
g) Einbringen des die Kernlage bildenden geschäumten Kunststoffes in den seitlich durch die Decklagen begrenzten Raum.

Erfindungsgemäß ist somit die Signalleitung, über die ein Diebstahlversuch, bei dem das jeweilige Flächenelement gezielt beschädigt wird, detektiert wird, in den von den Decklagen geschützten Kernbereich des betreffenden Flächenelements verlegt. Dabei ist die Signalleitung nicht einzeln in den Kern des Flächenelements eingeschäumt, sondern von einem Gitter getragen, an dem die Signalleitung gehalten ist.

Dies hat den Vorteil, dass die Signalleitung mit Hilfe des Trägergitters nicht nur auf einfache Weise lagerichtig in dem Kernbereich des Flächenelements positioniert werden kann. Vielmehr erlaubt die Anordnung des Signaldrahts auf dem Trägergitter die Verlegung einer Signalleitung in engen Schlaufen, so dass die von dem Trägergitter eingenommene Fläche dicht mit der Signalleitung abgedeckt ist. Genauso ist es möglich, zwei oder mehr Signalleitungen in engen Abständen über die von dem Gitter abgedeckte Fläche verteilt an dem Gitter zu befestigen.

Mit der Erfindung gelingt es somit, auf einfache Weise einerseits die Signalleitung gegen eine Manipulation von außen geschützt in dem jeweiligen Flächenelement anzuordnen und andererseits die Abschnitte des Flächenelements, die bei einem Diebstahlversuch der Gefahr einer gezielten Beschädigung ausgesetzt sind, mit mindestens einer Signalleitung so eng zu belegen, dass im Fall der Verlegung einer einzigen Signalleitung die zwischen den jeweils benachbart zueinander verlaufenden Abschnitten der Signalleitungen oder im Fall der Verlegung von zwei oder mehr Signalleitungen die zwischen diesen Signalleitungen verbleibenden Freiräume so klein sind, dass sie nicht durchbrochen werden könnten, ohne dass es zu einer Beschädigung der Signalleitung und damit einhergehend zu einem Alarm kommt.

Ein für die Praxis wichtiger Vorteil der Erfindung besteht dabei auch darin, dass es die Erfindung erlaubt, im Fall der Verwendung einer einzigen Signalleitung den Abstand von deren Abschnitten beispielsweise durch eine schlingenartige Anordnung oder im Fall der Verwendung von zwei oder mehr Signalleitungen den Abstand der Signalleitungen auf dem Gitter so eng zu wählen, dass es selbst mit hochauflösenden Detektionseinrichtungen nicht möglich ist, deren Lage in dem jeweiligen Flächenelement von außen eindeutig zu bestimmen. Hierdurch wird bei einem Diebstahlversuch für den Täter das Risiko maximiert, bei dem Versuch, das Flächenelement zu durchdringen, einen Alarm auszulösen.

Wie schon erwähnt, kann die Verlegung der Signalleitung auf dem Gitter in Schlaufen, also beispielsweise schlangenlinienförmig, erfolgen. Der Biegeradius und der Abstand zwischen zwei zueinander parallel verlaufenden Signalleitungsabschnitten kann dabei problemlos so gewählt werden, dass die gewünschte dichte, mit einem geringen Abstand erfolgende Anordnung der abschnittsweise benachbart verlaufenden Abschnitte der Signalleitung erreicht wird.

Als Signalleitungen kommen für die erfindungsgemäßen Zwecke aus der konventionellen Signalübertragungstechnik bekannte, aus einem elektrisch leitfähigen Werkstoff bestehende Signaldrähte, über die sich elektrische Signale übertragen lassen, aber auch Lichtwellenleiter in Frage, wie sie zur optischen Signalübertragung eingesetzt werden. Zum Schutz gegen äußere Einflüsse, wie unerwünschte elektrisch leitende Kontakte oder Kontakte zu Bestandteilen des Flächenelements, die eine die Funktion der Signalleitung beeinträchtigende chemische Reaktion auslösen könnten, kann die Signalleitung mit einer Schutzummantelung, insbesondere einer elektrisch isolierenden Ummantelung versehen sein. Dabei sollte insbesondere im Fall, dass nur eine Signalleitung verwendet werden soll, die Signalleitung so flexibel sein, dass die erfindungsgemäß angestrebte enge Verlegung möglich ist, ohne dass es dadurch zu einer Beschädigung, wie Quetschungen, Rissen oder Brüchen, kommt, die die Signalübertragung beeinträchtigen könnten.

Das erfindungsgemäß vorgesehene Gitter, welches die mindestens eine Signalleitung trägt, kann grundsätzlich aus jedem Material bestehen, das einerseits der Signalleitung einen sicheren Halt bietet und andererseits eine so große Formstabilität besitzt, dass die lagerichtige Positionierung des Gitters mit der Signalleitung in im Kernbereich zwischen den Decklagen des Flächenelements auf einfache Weise ermöglicht ist.

Dementsprechend kann ein erfindungsgemäß genutztes Gitter aus Metalldrähten oder Kunststoffdrähten bestehen, die miteinander in an sich bekannter Weise zu einer Gitterstruktur verbunden sind.

Genauso ist es aber auch denkbar, ein Gitter aus Vollmaterial, beispielsweise einer Folie oder einem Blech, in bekannter Weise durch Stanzen oder eine vergleichbare Bearbeitung zu erzeugen.

Als besonders vorteilhaft im Hinblick auf die Herstellung erfindungsgemäßer Flächenelemente erweisen sich Gitter, die netzartig ausgebildet sind und dabei beispielsweise in ihrer Längsrichtung so flexibel sind, dass sie sich zu einer Rolle aufwickeln lassen.

Insbesondere im Fall, dass als Signalleitung elektrisch leitende Signalleitungen verwendet werden sollen, hat es sich als vorteilhaft erwiesen, wenn das Gitter aus einem elektrisch nicht leitenden Material besteht, so dass das Gitter weder die Signalübertragung über die Signalleitung beeinflusst, noch die Gefahr elektrischer Kontakte oder Kurzschlüsse besteht.

Neben der einfachen Möglichkeit einer Befestigung der Signalleitung und der Möglichkeit der einfachen Verlegung besteht der besondere Effekt, der durch die erfindungsgemäße Verwendung eines Gitters als Träger der Signalleitung erzielt wird, darin, dass, wenn bei der Herstellung des Flächenelements die Kernlage in den zwischen den Decklagen des Flächenelements vorhandenen Raum eingeschäumt wird, die Freiräume des Gitters vom Schaum der Kernlage durchdrungen werden. Das die Signalleitung tragende Gitter ist in diesem Fall gemeinsam mit der Signalleitung vollständig in den geschäumten Kunststoff der Kernlage eingebettet, d.h. bis auf die Stellen, an denen beispielsweise die Anschlüsse an die Überwachungseinrichtung aus dem Flächenelement geführt werden müssen, vollständig vom Material der Kernlage umgeben. Auf diese Weise ist der positionsgenaue Halt des Gitters mit der Signalleitung in dem Flächenelement dauerhaft gesichert, ohne dass es dazu zusätzlichen Aufwands bedarf und ohne dass die Isolierwirkung der Kernlage beeinträchtigt wird. Für die erfindungsgemäßen Zwecke eignen sich demgemäß insbesondere Gitter mit Maschenweiten von 2 - 8 mm.

Die Öffnungen des Gitters können jede beliebige Form aufweisen, beispielsweise eckig, wie rechteckig, quadratisch, rautenförmig, oder ellipsoid, insbesondere rund geformt sein.

Die erfindungsgemäß in dem mindestens einen Flächenelement des Kofferaufbaus angeordnete Signalleitung kann ohne Weiteres an eine handelsübliche Überwachungseinrichtung angeschlossen werden. Hierzu kann eine vom Inneren des Laderaums zugängliche Anschlussstelle zum Anschluss der Signalleitung an die Überwachungseinrichtung vorgesehen sein. Die Anschlussstelle kann beispielsweise an der vom Laderaum des Kofferaufbaus aus zugänglichen Seite der inneren Decklage des Flächenelements angeordnet sein, die in erfindungsgemäßer Weise mit dem die Signalleitung tragenden Gitter ausgestattet ist.

Die Maße des Gitters sind entsprechend des gewünschten zu schützenden Bereichs der Paneele zu wählen. Vorteilhafterweise erstreckt sich das Gitter über die gesamte von der Kernlage überdeckte, in Längsrichtung des Kofferaufbaus gemessene Länge der Decklage des Flächenelements, an dem das Gitter befestigt werden soll. Dabei versteht es sich von selbst, dass Bereiche des Flächenelements, die beispielsweise für die Anbindung an ein anderes Flächenelement oder zur Befestigung von besonderen Bauteilen benötigt werden, bei einer solchen Verlegung des Gitters ausgelassen werden können.

Da die Angriffe gegen die Außenhaut des Kofferaufbaus im Fall eines Diebstahlversuchs in der Regel nur bis zu einer bestimmten Höhe erfolgen, kann es zweckmäßig sein, die Höhe, über die sich das Gitter im Einbauzustand des Flächenelements erstreckt, ausgehend vom unteren Rand des Flächenelements nur auf einen Teil der Höhe der Decklage zu beschränken, an der das Gitter mit der Signalleitung befestigt ist. Eine hierzu geeignete, jeweils vom unteren Rand des Flächenelements im Einbauzustand gemessene Höhe liegt bei 50 - 200 cm.

Eine vereinfachte Herstellung des Flächenelements ergibt sich, wenn das Gitter parallel zu einer der Decklagen angeordnet ist. Dies erlaubt es, die der Kernlage zugeordnete Innenfläche der betreffenden Decklage als Bezugsfläche für die Ausrichtung des die Signalleitung tragenden Gitters heranzuziehen.

So kann das Gitter beispielsweise direkt auf die betreffende Innenfläche aufgelegt werden. Hierzu kann das Gitter mit einer Klebbeschichtung versehen sein oder ein Kleber auf die Innenfläche aufgetragen werden, bevor das Gitter mit der Signalleitung aufgelegt wird.

Alternativ kann mindestens ein Fixierelement vorgesehen sein, das das Gitter mit der Signalleitung so an der der Kernlage zugeordneten Innenfläche der jeweiligen Decklage fixiert, dass es auch während des Einschäumens der Kernlage sicher seine vorgesehene Position beibehält.

Mit Blick auf die besonders vorteilhafte und als solche erfindungsgemäß angestrebte Durchdringung der Öffnungen des Gitters mit dem Schaumstoff der Kernlage hat es sich als besonders zweckmäßig erwiesen, wenn das Gitter mit der Signalleitung bei der Herstellung des Flächenelements in einem definierten Abstand zur der Kernlage zugeordneten Innenfläche der Decklage angeordnet wird, auf der die Befestigung erfolgen soll. Hierzu kann ebenfalls das Fixierelement genutzt werden. Dabei versteht es sich von selbst, dass erforderlichenfalls zwei oder mehr Fixierelemente verwendet werden können, um das Gitter mit der Signalleitung zu fixieren und/oder im jeweils günstigen Abstand zur Innenfläche der Decklage zu halten, an der das Gitter mit der Signalleitung positioniert werden soll. Der Abstand, in dem das Gitter mit der Signalleitung über der Innenfläche der zugeordneten Decklage gehalten wird, beträgt dabei 1 mm bis 6 mm.

Als Fixierelemente können beispielsweise Hot-Melt Klebepunkte, Klebepads oder desgleichen verwendet werden, deren Dicke optimalerweise so angepasst ist, dass das Gitter mit der Signalleitung in der jeweils vorgesehenen Höhe über der Innenfläche der zugeordneten Decklage angeordnet ist.

Die Sicherheit, mit der bei einem Diebstahlversuch die mutwillige Beschädigung des Flächenelements detektiert wird, kann dadurch maximiert werden, dass das Gitter mit der Signalleitung an der der Kernlage zugeordneten Innenfläche der der Umgebung des Kofferaufbaus zugeordneten äußeren Decklage angeordnet wird.

Bei einem erfindungsgemäß ausgestatteten Flächenelement handelt es sich typischerweise um eine Längswand des Kofferaufbaus. Genauso positiv wie dort wirkt sich die Erfindung aber auch aus, wenn das jeweils das Dach, die Stirnseite oder die Türen bildende Flächenelement in erfindungsgemäßer Weise mit einem Diebstahlschutz versehen ist.

Dabei können die Decklagen des erfindungsgemäß ausgebildeten Flächenelements, wie aus dem Stand der Technik bekannt, aus einzelnen vorgefertigten Paneelen gebildet sein, die in bekannter Weise miteinander verbunden sind.

Das Gitter kann mit der an ihm befestigten Signalleitung als vorkonfektionierter Zuschnitt bereitgestellt werden, dessen Abmessungen an die zu bedeckende Fläche der jeweiligen Decklage angepasst sind.

Eine besonders einfache Art und Weise der Montage und gleichzeitig preisgünstige Möglichkeit der Vorproduktion des Gitters mit der Signalleitung ergibt sich dann, wenn das die Signalleitung tragende Gitter in Schritt a) in zu einer Rolle aufgerollter Form bereitgestellt wird und das Auflegen in Schritt d) durch kontinuierlich erfolgendes Abrollen des Gitters von der Rolle entlang der zugeordneten Innenfläche der im Arbeitsschritt b) bereitgestellten Decklage erfolgt.

Darüber hinaus kann es zweckmäßig sein, das Gitter nach dem Auflegen auf die Decklage mittels einer Andrückrolle anzudrücken, um eine sichere Anbindung zu gewährleisten. Im Fall, dass Fixierelemente vorgesehen sind, drückt die Andrückrolle das Gitter gegen die beispielsweise mit einem Klebstoff belegten, an den Fixierelementen vorgesehenen Auflagefläche, die typischerweise an der von der jeweiligen Decklage abgewandten Stirnseite des Fixierelements vorgesehen ist, um eine sichere Anbindung des Gitters an das Fixierelement zu gewährleisten. Genauso kann im Fall, dass das Gitter direkt auf die zugeordnete Innenfläche der Decklage gelegt wird, die Andrückrolle das Gitter mit der Signalleitung gegen die Innenfläche drücken, um einen sicheren Kontakt mit dem dort vorgesehenen Klebstoff und damit einhergehend eine feste Anbindung des Gitters an die Innenfläche zu gewährleisten.

Nachdem das Gitter und die daran befestigte Signalleitung auf der äußeren Decklage montiert wurden, erfolgt die Einbringung des die Kernlage bildenden, geschäumten Kunststoffes. Dies kann entweder vor oder nach Zusammensetzung der inneren und äußeren Decklage erfolgen.

Die Erfindung wird nachfolgend anhand einer ein Ausführungsbeispiel darstellenden Zeichnung näher erläutert. Es zeigen jeweils schematisch:
- Fig. 1: ein Nutzfahrzeug in einer perspektivischen Ansicht von hinten,

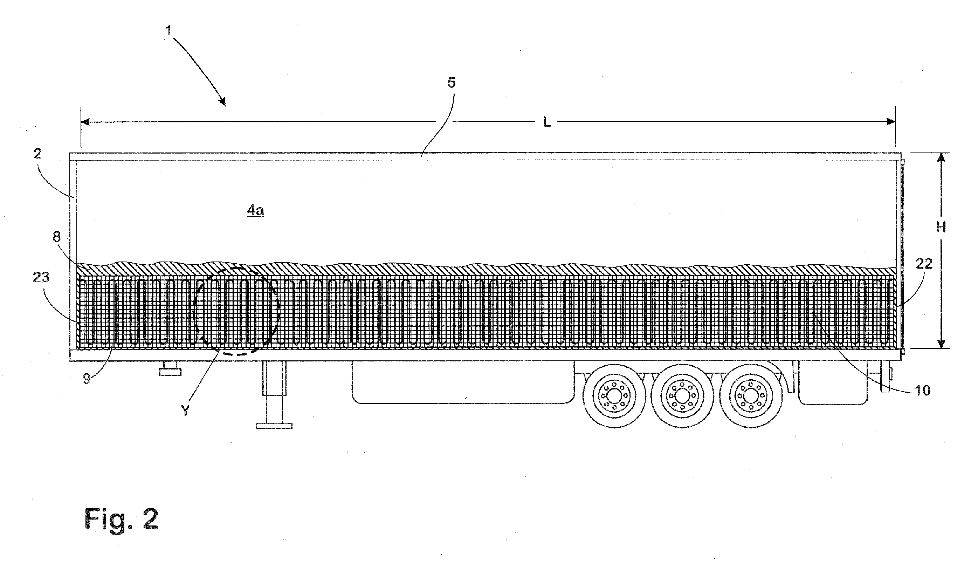

- Fig. 2: das Nutzfahrzeug in einer teilweise aufgebrochenen Längsseitenansicht;
- Fig. 3: ein Ausschnitt Y von Fig. 2 in vergrößerter Darstellung;
- Fig. 4: einen Ausschnitt eines Schnitts entlang der in Fig. 3 eingetragenen Schnittlinie X-X;
- Fig. 5: eine Vorrichtung zum Auflegen eines Gitters in seitlicher Ansicht.

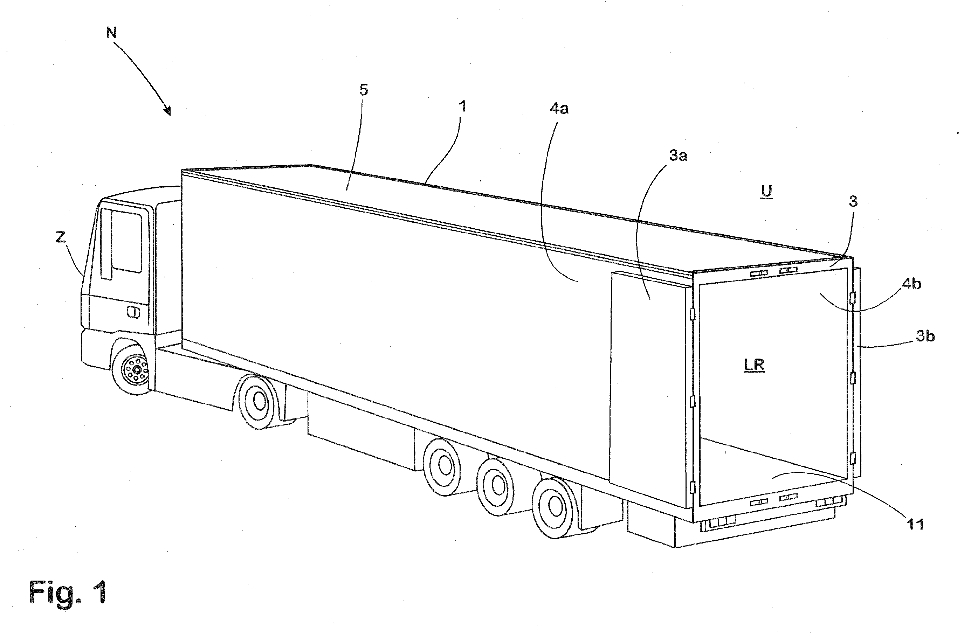

In der Fig. 1 ist ein Nutzfahrzeug N in Form eines Sattelaufliegers dargestellt, der von einer Zugmaschine Z gezogen wird und zum Transport von temperaturempfindlichem Transportgut ausgerüstet ist.

Das Nutzfahrzeug N trägt einen Kofferaufbau 1, der mit einer Stirnwand 2, einer Rückwand 3, zwei Längsseitenwänden 4a,4b und einem Dach 5 einen Laderaum LR gegenüber der freien Umgebung U des Kofferaufbaus 1 umgrenzt. In der Rückwand 3 sind in konventioneller Weise zwei in Fig. 1 in geöffneter Stellung dargestellte, hinsichtlich des Vorhandenseins von Decklagen und dazwischen angeordneter geschäumter Kernlage ebenfalls nach Art der erfindungsgemäßen Flächenelemente ausgebildete Flügeltüren 3a,3b vorgesehen, um den Laderaum LR von der Rückseite des Nutzfahrzeugs N her befahren zu können.

Die Seitenwände 4a,4b, die Seitenwand 2, die Rückwand 3 und das Dach 5 sind in an sich bekannter Weise in einem hier nicht sichtbaren Rahmen gehalten, der nach Art eines Skeletts die Grundstruktur des Kofferaufbaus 1 bildet.

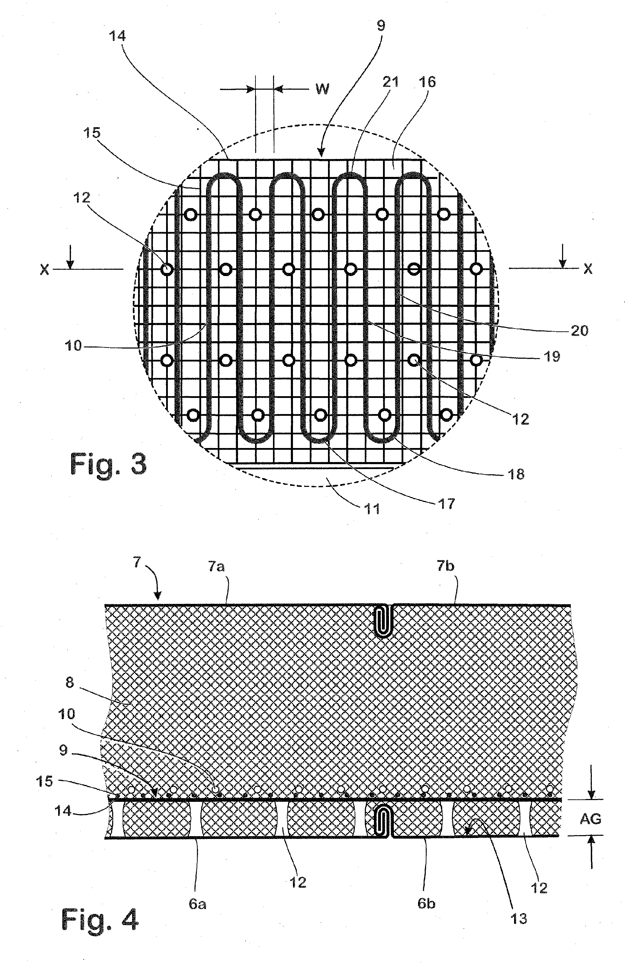

Die Längsseitenwände 4a,4b, die Stirnwand 2 und das Dach 5 des Kofferaufbaus 1 stellen jeweils ein Flächenelement dar. Dessen Aufbau ist für jede der Längsseitenwände 4a,4b, die Stirnwand 2 und das Dach 5 prinzipiell gleich und in Fig. 4 beispielhaft für die in Vorwärtsfahrtrichtung des Nutzfahrzeugs N linke Längsseitenwand 4a dargestellt.

So weisen die die Seitenwände 4a,4b, die Seitenwand 2, die Rückwand 3 und das Dach 5 bildenden Flächenelemente jeweils eine der Umgebung des Kofferaufbaus 1 zugeordnete, rechteckige äußere Decklage 6 auf, die in bekannter Weise aus einzelnen vorgefertigten Paneelen 6a,6b zusammengesetzt ist. Des Weiteren weist das Flächenelement eine dem Laderaum LR zugeordnete, ebenso rechteckige innere Decklage 7 auf, die ebenfalls in an sich bekannter Weise aus vorgefertigten Paneelen 7a,7b zusammengesetzt ist. Die Paneele 6a,6b,7a,7b bestehen in bekannter Weise jeweils aus einem Stahlblechformteil, das mit verschiedenen Schichten belegt ist, um eine optimierte Funktion und optische Erscheinung zu gewährleisten.

In den an seinen Längsseiten durch die Decklagen 6,7 begrenzten Zwischenbereich ist in ebenfalls bekannter Weise ein Kunststoffmaterial eingeschäumt, das die Kernlage 8 des jeweiligen Flächenelements bildet. Bei dem geschäumten Kunststoff handelt es sich beispielsweise um geschäumtes Polyurethan.

Bei den die Längsseitenwände 4a,4b bildenden Flächenelementen ist in die Kernlage 8 ein Gitter 9 eingebettet, das eine Signalleitung 10 trägt. Das Gitter 9 mit der Signalleitung 10 erstreckt sich dabei über die gesamte Länge L und ausgehend vom unteren dem Boden 11 des Kofferaufbaus 1 zugeordneten Rand der jeweiligen Längsseitenwand 4a,4b über etwa 40 - 70 % (entsprechend etwa 110 - 195 cm) der Höhe H der jeweiligen Längsseitenwand 4a,4b. Das die Signalleitung 10 tragende Gitter 9 ist dabei mittels Fixierelementen 12 in einem Abstand AG von der der Kernlage 8 zugeordneten Innenfläche 13 der äußeren Decklage 6 gehalten. Der Abstand AG beträgt hier beispielsweise 4 mm.

Die Fixierelemente 12 sind jeweils zylindrisch nach Art von kurzen Stäben oder desgleichen geformt und sitzen mit ihrer einen Stirnseite auf der Innenfläche 13, während das Gitter 9 auf ihrer anderen Stirnseite liegt. Auf diese Weise ist das Gitter 9 mit der Signalleitung 10 mittels einer Vielzahl von gleichmäßig über die Innenfläche 13 verteilte angeordneten gleichartigen Fixierelementen 12 an der Innenfläche 13 gehalten.

Das Gitter 9 besteht beispielsweise aus Kunststoffstäben 14, die in regelmäßigen Abständen über die Höhe des Gitters 9 verteilt sich über die von dem Gitter 9 bedeckte Länge L erstrecken, und weiteren Kunststoffstäben 15, die quer dazu ausgerichtet sich in gleichmäßigen Abständen über die Länge L verteilt über die Höhe des Gitters 9 erstrecken. In den Kreuzungspunkten sind die Kunststoffstäbe 14,15 in bekannter Weise miteinander fest verbunden. Dabei sind die Kunststoffstäbe 14 in ihrer Längsrichtung so flexibel, dass das Gitter 9 mit der von ihm getragenen Signalleitung 10 um eine parallel zu den Kunststoffstäben 15 ausgerichtete Achse zu einer Rolle R gewickelt werden kann. Die Maschenweite W, d.h. der minimale Abstand der jeweils parallel zueinander ausgerichteten Kunststoffstäbe 14,15 der Durchgangsöffnungen 16 des Gitters 9 beträgt dabei beispielsweise 2 mm bis 8 mm, so dass der Kunststoff der Kernlage 8 beim Einschäumen sicher durch die Durchgangsöffnungen 16 tritt und sich an die Innenfläche 13 der äußeren Decklage 6 anlegt und mit der dort vorgesehenen Beschichtung eine stoffschlüssige Anbindung eingeht. Das Gitter 9 mit der Signalleitung 10 ist auf diese Weise vollständig in den Kunststoff der Kernlage 8 eingebettet.

Die Signalleitung 10 ist im hier dargestellten Beispiel auf der von der Innenfläche 13 der äußeren Decklage 6 abgewandten Seite des Gitters 9 angeordnet, könnte genauso aber auch auf der anderen Seite des Gitters 9 befestigt sein. Dabei ist die Signalleitung 10 in enge Schlaufen 17,18 gelegt, die sich jeweils über annähernd die gesamte Höhe des Gitters 9 erstrecken. Der Abstand der zueinander jeweils parallel verlaufenden Abschnitte 19,20 der Schlaufen 17,18 ist dabei so gewählt, dass einerseits der Krümmungsradius der die Abschnitte 19,20 verbindenden Bogenabschnitte 21 so groß ist, dass eine Beschädigung der Signalleitung 10 ausgeschlossen ist, andererseits aber die Abschnitte 19,20 so eng nebeneinander liegen, dass sich auch bei einer aus der Umgebung U mit einer hochauflösenden Detektoreinrichtung durchgeführten Untersuchung kein eindeutiges Bild über den Verlauf der Signalleitung 10 in den Längsseitenwänden 4a,4b erstellen lässt.

Als Signalleitung 10 ist beim hier beschriebenen Ausführungsbeispiel ein konventioneller Signaldraht verwendet worden, der mit einer Isolierummantelung versehen ist. Mit seinen Enden ist er an eine hier nicht sichtbare Überwachungseinrichtung angeschlossen, die in an sich bekannter Weise überwacht, ob die Signalleitung 10 in Takt ist und, sofern dies nicht der Fall ist, einen Alarm auslöst. Alternativ zu einem konventionellen Signaldraht und einer auf einer elektrischen Spannung basierenden Überwachung von dessen Zustand kann beispielsweise als Signalleitung 10 auch ein Lichtleiterkabel eingesetzt werden, wie es zur optischen Signalübertragung eingesetzt wird.

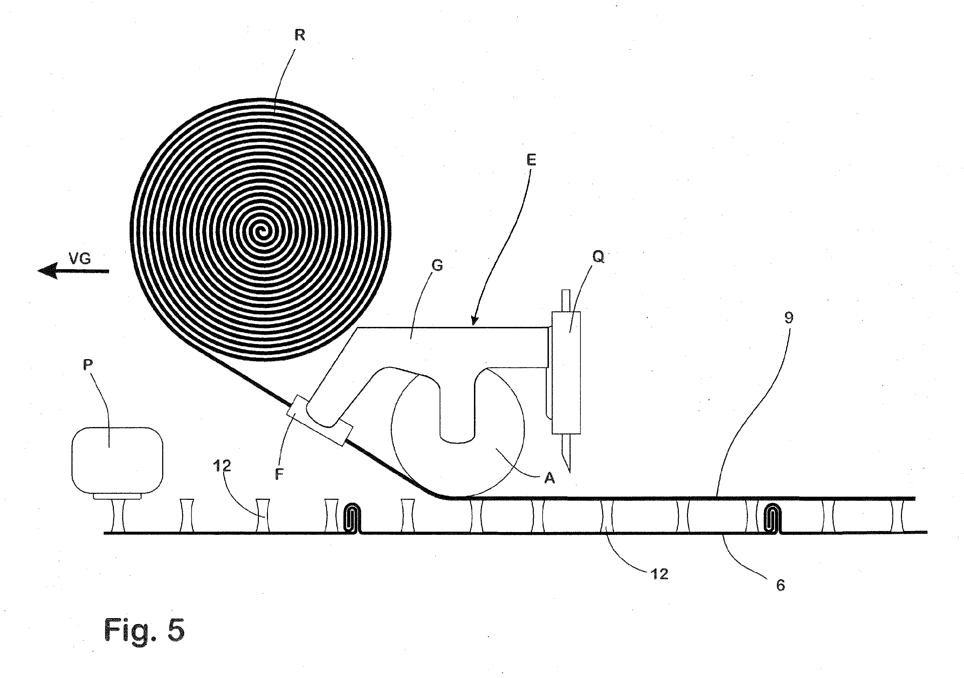

In Fig. 5 ist eine Vorrichtung zum Auflegen des die Signalleitung 10 tragenden Gitters 9 auf die Decklage 6 dargestellt.

Die Vorrichtung ist Teil einer hier weiter nicht gezeigten, im Übrigen konventionellen Fertigungsstrecke zur Herstellung der Flächenelemente, die die Längsseitenwände 4a,4b bilden.

Zur Herstellung des jeweiligen Flächenelements wird zunächst die äußere Decklage 6 bereitgestellt und mit ihrer der Umgebung U zugeordneten Außenseite flach auf eine ebene Montagefläche gelegt.

Anschließend werden mit einer Positioniereinrichtung P die Fixierelemente 12 auf die der später erzeugten Kernlage 8 zugeordnete Innenfläche 13 der Decklage 6 gesetzt. Die Fixierelemente 12 sind dazu an ihren Stirnflächen jeweils mit Klebstoff beschichtet.

Daraufhin wird das zu einer Rolle R aufgewickelte, bereits mit der Signalleitung 10 bestückte Gitter 9 mit seiner einen Schmalseite an der zugeordneten Schmalseite 22 der Innenfläche 13 der Decklage 6 auf die freien Stirnseiten der dort sitzenden Fixierelemente 12 aufgelegt.

Die Rolle R wird dann unter fortlaufendem Abrollen und Auflegen des Gitters 9 auf die Fixierelemente 12 mit konstanter Vorschubgeschwindigkeit VG in Richtung der gegenüberliegenden Schmalseite 23 und parallel zur Längskante der Innenfläche 13 der Decklage 6 über die Länge L bewegt.

Die positionsgenaue Ablage des Gitters 9 mit der Signalleitung 10 auf den Fixierelementen 12 wird dabei durch eine Führung F sichergestellt, die am Gehäuse G einer Einrichtung E befestigt ist. Die Einrichtung E wird im Nachlauf zu der Rolle R mit derselben Vorschubgeschwindigkeit VG über das Gitter 9 mit der Signalleitung 10 bewegt. Sie trägt neben der Führung R eine Andrückrolle A, die auf dem Gitter 9 abrollt und das Gitter 9 mit einem Druck gegen die Fixierelemente 12 drückt, der für eine sichere Anbindung des Gitters 9 an die Fixierelemente 12 mittels des auf deren zugeordnete Stirnseite aufgetragenen Klebstoffs ausreicht.

Des Weiteren trägt die Einrichtung E ein Querteilmesser Q. Dieses kommt zum Einsatz, wenn die Schmalseite 23 erreicht ist, und trennt das auf den Fixierelementen 12 positionierte Gitter 9 mit der Signalleitung 10 von dem restlichen, auf der Rolle R verbleibenden Gitter ab.

Anschließend wird die innere Decklage 7 in bekannter Weise im vorgesehenen Abstand oberhalb der Decklage 6 angeordnet und der die Kernlage 8 bildende Kunststoff in den so zwischen den Decklagen 6,7 abgegrenzten Zwischenraum eingeschäumt. Nach dem Aushärten der Kernlage 8 ist das Gitter 9 mit der Signalleitung 10 vollständig in das Material der Kernlage 8 eingebettet.

Bei der Montage des Kofferaufbaus 1 werden die Enden der Signalleitung 10 in geeigneter Weise an den Signaleingang der hier nicht gezeigten Überwachungseinrichtung angeschlossen.

### BEZUGSZEICHEN

- 1: Kofferaufbau
- 2: Stirnwand des Kofferaufbaus 1 (Flächenelement)
- 3: Rückwand des Kofferaufbaus 1
- 3a,3b: Flügeltüren der Rückwand 3 (Flächenelemente)
- 4a,4b: Längsseitenwände des Kofferaufbaus 1 (Flächenelemente)
- 5: Dach des Kofferaufbaus 1 (Flächenelement)
- 6: äußere Decklage der Längsseitenwand (Flächenelement) 4a
- 6a,6b: Paneele der äußeren Decklage 6
- 7: innere Decklage der Längsseitenwand (Flächenelement) 4a
- 7a,7b: Paneelen der inneren Decklage 7
- 8: Kernlage der Längsseitenwand (Flächenelement) 4a
- 9: Gitter
- 10: Signalleitung
- 11: Boden des Kofferaufbaus 1
- 12: Fixierelemente
- 13: Innenfläche
- 14,15: Kunststoffstäbe des Gitters 9
- 16: Durchgangsöffnungen des Gitters 9
- 17,18: Schlaufen der Signalleitung 10
- 19,20: parallel ausgerichtete Abschnitte der Schlaufen 17,18
- 21: die Abschnitte verbindende Bogenabschnitte
- 22: erste Schmalseite der Innenfläche 13 der Decklage 6
- 23: zweite Schmalseite der Innenfläche 13 der Decklage 6

- A: Andrückrolle
- AG: Abstand zwischen Gitter 9 und Innenfläche 13
- E: Einrichtung
- F: Führung
- G: Gehäuse
- H: Höhe der Längsseitenwände 4a,4b
- L: von dem Gitter 9 bedeckte Länge der Innenfläche 13
- LR: Laderaum
- N: Nutzfahrzeug
- P: Positioniereinrichtung
- Q: Querteilmesser
- R: Rolle
- U: Umgebung des Kofferaufbaus 1
- W: Maschenweite des Gitters 9
- VG: Vorschubgeschwindigkeit
- Z: Zugmaschine

## Patentansprüche

1. Kofferaufbau für ein Nutzfahrzeug (N), wobei der Kofferaufbau (1) einen Laderaum (LR) mit wenigstens einem Flächenelement (2,3a,3b,4a,4b,5) umgrenzt, das
a) eine der Umgebung (U) des Nutzfahrzeugs (N) zugeordnete, äußere Decklage (6),
b) eine dem Laderaum (LR) zugeordnete, innere Decklage (7)
und
c) eine zwischen der äußeren und der inneren Decklage (7) angeordnete Kernlage (8), die aus einem geschäumten Kunststoff gebildet ist,
umfasst, wobei das wenigstens eine Flächenelement (2,3a,3b,4a,4b,5) mit einem Diebstahlschutz ausgestattet ist, welcher mindestens eine Signalleitung (10) umfasst, die mit einer Überwachungseinrichtung gekoppelt ist, die bei einer Beschädigung der Signalleitung (10) einen Alarm auslöst, **dadurch gekennzeichneichnet, dass** die mindestens eine Signalleitung (10) von einem Gitter (9) getragen ist und **dass** das die Signalleitung (10) tragende Gitter (9) mit der Kernlage (8) zwischen der äußeren und der inneren Decklage (7) des Flächenelements (2,3a,3b,4a,4b,5) angeordnet ist.

2. Kofferaufbau nach Anspruch 1, **dadurch**
**gekennzeichneichnet, dass** die Signalleitung (10)ein elektrisch leitender Draht ist.

3. Kofferaufbau nach einem der voranstehenden Ansprüche, **dadurch gekennzeichnet, dass** eine vom Inneren des Laderaums (LR) zugängliche Anschlussstelle zum Anschluss an die Überwachungseinrichtung vorgesehen ist.

4. Kofferaufbau nach einem der voranstehenden Ansprüche, **dadurch gekennzeichneichnet, dass** das die Signalleitung (10) tragende Gitter (9) aus einem elektrisch nicht leitfähigen Material gebildet ist.

5. Kofferaufbau nach einem der voranstehenden Ansprüche, **dadurch gekennzeichneichnet, dass** sich das die Signalleitung (10) tragende Gitter (9) über die Länge der von der Kernlage (8) des Flächenelements (2,3a,3b,4a,4b,5) überdeckten Fläche erstreckt.

6. Kofferaufbau nach einem der voranstehenden Ansprüche, **dadurch gekennzeichnet, dass** das Flächenelement (2,3a,3b,4a,4b,5) eine Längswand (4a,4b), eine Stirnwand (2) und/oder ein Dach (5) des Kofferaufbaus (1) bildet.

7. Kofferaufbau nach Anspruch 6, **dadurch gekennzeichnet, dass** sich das Gitter (9) ausgehend von einem unteren Rand der von der Kernlage (8) des Flächenelements (2,3a,3b,4a,4b,5) überdeckten Fläche über eine Höhe von mindestens 50 cm erstreckt.

8. Kofferaufbau nach einem der voranstehenden Ansprüche, **dadurch gekennzeichneichnet, dass** das die Signalleitung (10) tragende Gitter (9) mittels wenigstens eines Fixierelements (12) an einer der Decklagen (6,7) des Flächenelements (2,3a,3b,4a,4b,5) gehalten ist.

9. Kofferaufbau nach einem der voranstehenden Ansprüche, **dadurch gekennzeichneichnet, dass** das die Signalleitung (10) tragende Gitter (9) direkt an einer der Kernlage (8) zugewandten Innenfläche (13) einer der Decklagen (6,7) befestigt ist.

10. Kofferaufbau nach einem der voranstehenden Ansprüche, **dadurch gekennzeichneichnet, dass** das die Signalleitung (10) tragende Gitter (9) vollständig in den geschäumten Kunststoff der Kernlage (8) eingebettet ist.

11. Verfahren zur Herstellung eines Flächenelements (2,3a,3b,4a,4b,5) für einen gemäß einem der voranstehenden Ansprüche ausgebildeten Kofferaufbau (1), wobei das Flächenelement (2,3a,3b,4a,4b,5) eine äußere, im Gebrauch der Umgebung (U) des Kofferaufbaus (1) zugeordnete Decklage (6), eine im Gebrauch einem vom Kofferaufbau (1) umgrenzten Laderaum (LR) zugeordnete innere Decklage (7) und eine zwischen den Decklagen (6,7) vorhandene Kernlage (8) umfasst, die aus einem geschäumten Kunststoff besteht, und wobei das Verfahren folgende Schritte umfasst:
a) Bereitstellen eines eine Signalleitung (10) tragenden Gitters (9) ;
b) Bereitstellen einer Decklage (6);
c) optionales Anordnen von wenigstens einem Fixierelement (12) auf der beim fertigen Flächenelement der Kernlage (8) zugeordneten Innenfläche (13) der bereitgestellten Decklage (6);
d) Auflegen des die Signalleitung (10) tragenden Gitters (9) auf der beim fertigen Flächenelement der Kernlage (8) zugeordneten Innenfläche der bereitgestellten Decklage (6);
e) optionales Ablängen des Gitters (9) auf eine Solllänge;
f) Anordnen einer zweiten Decklage (7) in einem Abstand zur zuvor bereitgestellten und mit dem die Signalleitung (10) tragenden Gitter (9) versehenen Decklage (6), so dass das die Signalleitung (10) tragende Gitter (9) in dem seitlich durch die Decklagen (6,7) begrenzten Raum angeordnet ist;
g) Einbringen des die Kernlage (8) bildenden geschäumten Kunststoffes in den seitlich durch die Decklagen (6,7) begrenzten Raum.

12. Verfahren nach Anspruch 11, **dadurch**
**gekennzeichneichnet, dass** das die Signalleitung (10) tragende Gitter (9) in Schritt a) in zu einer Rolle (R) aufgerollter Form bereitgestellt wird und **dass** das Auflegen in Schritt d) durch kontinuierlich erfolgendes Abrollen des Gitters (9) von der Rolle (R) entlang der zugeordneten Innenfläche (11) der im Arbeitsschritt b) bereitgestellten Decklage (6) erfolgt.

13. Verfahren nach einem der Ansprüche 11 oder 12, **dadurch gekennzeichneichnet, dass** das die Signalleitung (10) tragende Gitter (9) mittels eines Klebers an der Innenfläche (11) der im Arbeitsschritt b) bereitgestellten Decklage (6) befestigt wird.

14. Verfahren nach Anspruch 12 und 13, **dadurch**
**gekennzeichnet, dass** das die Signalleitung (10) tragende Gitter (9) nach dem Auflegen auf die Innenfläche (13) der im Arbeitsschritt b) bereitgestellten Decklage (6) mittels einer Andrückrolle (A) an die Innenfläche (11) oder das mindestens eine an der Innenfläche (11) angeordnete Fixierelement (12) angedrückt wird.

## Claims

1. Box body for a utility vehicle (N), wherein the box body (1) delimits a loading space (LR) with at least one surface element (2, 3a, 3b, 4a, 4b, 5), which
a) an outer cover layer (6) assigned to the environment (U) of the utility vehicle (N),
b) an inner cover layer (7) assigned to the loading space (LR)
and
c) a core layer (8) arranged between the outer and inner cover layers (7), which is formed from a foamed plastic,
wherein the at least one surface element (2, 3a, 3b, 4a, 4b, 5) is equipped with an anti-theft means which comprises at least one signal line (10) which is coupled to a monitoring device which triggers an alarm in the event of damage to the signal line (10), **characterized in that** the at least one signal line (10) is carried by a grid (9) and that the grid (9) carrying the signal line (10) is arranged with the core layer (8) between the outer and the inner cover layer (7) of the surface element (2, 3a, 3b, 4a, 4b, 5).

2. Box body according to claim 1, **characterized in that** the signal line (10) is an electrically conductive wire.

3. Box body according to one of the preceding claims, **characterized in that** a connection point accessible from the interior of the load compartment (LR) is provided for connection to the monitoring device.

4. Box body according to one of the preceding claims, **characterized in that** the grid (9) carrying the signal line (10) is formed from an electrically nonconductive material.

5. Box body according to one of the preceding claims, **characterized in that** the grid (9) carrying the signal line (10) extends over the length of the surface covered by the core layer (8) of the surface element (2, 3a, 3b, 4a, 4b, 5).

6. Box body according to one of the preceding claims, **characterized in that** the surface element (2, 3a, 3b, 4a, 4b, 5) forms a longitudinal wall (4a, 4b), an end wall (2) and/or a roof (5) of the box body (1).

7. Box body according to claim 6, **characterized in that** the grid (9) extends over a height of at least 50 cm starting from a lower edge of the surface covered by the core layer (8) of the surface element (2, 3a, 3b, 4a, 4b, 5).

8. Box body according to one of the preceding claims, **characterized in that** the grid (9) carrying the signal line (10) is held on one of the cover layers (6, 7) of the surface element (2, 3a, 3b, 4a, 4b, 5) by means of at least one fixing element (12).

9. Box body according to one of the preceding claims, **characterized in that** the grid (9) carrying the signal line (10) is fixed directly to an inner surface (13) of one of the cover layers (6, 7) facing the core layer (8).

10. Box body according to one of the preceding claims, **characterized in that** the grid (9) carrying the signal line (10) is completely embedded in the foamed plastic of the core layer (8).

11. Method for producing a surface element (2, 3a, 3b, 4a, 4b, 5) for a box body (1) formed in accordance with one of the preceding claims, wherein the surface element (2, 3a, 3b, 4a, 4b, 5) comprises an outer cover layer (6) assigned, when in usage, to the surroundings (U) of the box body (1), an inner cover layer (7) assigned, when in usage, to a loading space (LR) delimited by the box body (1) and a core layer (8) which exists between the cover layers (6, 7) and consists of a foamed plastic, and wherein the method comprises the following steps:
a) Providing a grid (9) carrying a signal line (10);
b) Providing a top layer (6);
c) optionally arranging at least one fixing element (12) on the inner surface (13) of the cover layer (6) provided, which is assigned to the core layer (8) in the finished surface element;
d) placing the grid (9) carrying the signal line (10) on the inner surface of the prepared cover layer (6) assigned to the core layer (8) of the finished surface element;
e) optionally cutting of the grille (9) to a desired length;
f) arranging a second cover layer (7) at a distance from the cover layer (6) previously provided and provided with the grid (9) carrying the signal line (10), so that the grid (9) carrying the signal line (10) is arranged in the space laterally delimited by the cover layers (6, 7);
g) inserting the foamed plastic forming the core layer (8) into the space bounded laterally by the cover layers (6, 7).

12. Method according to claim 11, **characterized in that** the grid (9) carrying the signal line (10) is provided in step a) in a form rolled up into a roll (R) and that the placing in step d) is performed by continuously unrolling the grid (9) from the roll (R) along the associated inner surface (11) of the cover layer (6) provided in step b).

13. Method according to one of claims 11 or 12, **characterized in that** the grid (9) carrying the signal line (10) is fixed by means of an adhesive to the inner surface (11) of the cover layer (6) provided in step b).

14. Method according to claims 12 and 13, **characterized in that** the grid (9) carrying the signal line (10) is pressed against the inner surface (11) or the at least one fixing element (12) arranged on the inner surface (11) by means of a pressure roller (A) after being placed on the inner surface (13) of the cover layer (6) provided in step b).

## Revendications

1. Structure de coffre pour un véhicule utilitaire (N), où la structure de coffre (1) délimite un espace de chargement (LR) avec au moins un élément de surface (2, 3a, 3b, 4a, 4b, 5) qui a
a) une couche de couverture extérieure (6) associée à l'environnement (U) du véhicule utilitaire (N),
b) une couche de couverture intérieure (7) associée à l'espace de chargement (LR)
et
c) une couche centrale (8) disposée entre la couche de couverture extérieure et la couche de couverture intérieure (7), qui est formée d'une matière plastique expansée,
où l'au moins un élément de surface (2, 3a, 3b, 4a, 4b, 5) est équipé d'une protection antivol qui comprend au moins une ligne de signalisation (10) qui est couplée à un dispositif de surveillance qui déclenche une alarme en cas d'endommagement de la ligne de signalisation (10), **caractérisé en ce que** l'au moins une ligne de signalisation (10) est portée par une grille (9) et que la grille (9) portant la ligne de signalisation (10) est disposée avec la couche centrale (8) entre la couche de couverture extérieure et la couche de couverture intérieure (7) de l'élément de surface (2, 3a, 3b, 4a, 4b, 5).

2. Structure de coffre selon la revendication 1, **caractérisé en ce que** la ligne de signalisation (10) est un fil électriquement conducteur.

3. Structure de coffre selon l'une des revendications précédentes, **caractérisé en ce qu'**il est prévu un point de raccordement accessible depuis l'intérieur du compartiment de chargement (LR) pour le raccordement au dispositif de surveillance.

4. Structure de coffre selon l'une des revendications précédentes, **caractérisé en ce que** la grille (9) portant la ligne de signalisation (10) est formée d'un matériau non conducteur de l'électricité.

5. Structure de coffre selon l'une des revendications précédentes, **caractérisé en ce que** la grille (9) portant la ligne de signalisation (10) s'étend sur la longueur de la surface recouverte par la couche centrale (8) de l'élément de surface (2, 3a, 3b, 4a, 4b, 5).

6. Structure de coffre selon l'une des revendications précédentes, **caractérisé en ce que** l'élément de surface (2, 3a, 3b, 4a, 4b, 5) forme une paroi longitudinale (4a, 4b), une paroi frontale (2) et/ou un toit (5) de la structure de coffre (1).

7. Structure de coffre selon la revendication 6, **caractérisé en ce que** la grille (9) s'étend sur une hauteur d'au moins 50 cm à partir d'un bord inférieur de la surface recouverte par la couche centrale (8) de l'élément de surface (2, 3a, 3b, 4a, 4b, 5).

8. Structure de coffre selon l'une des revendications précédentes, **caractérisé en ce que** la grille (9) portant la ligne de signalisation (10) est maintenue sur l'une des couches de recouvrement (6, 7) de l'élément de surface (2, 3a, 3b, 4a, 4b, 5) au moyen d'au moins un élément de fixation (12).

9. Structure de coffre selon l'une des revendications précédentes, **caractérisé en ce que** la grille (9) portant la ligne de signalisation (10) est fixée directement sur une surface intérieure (13), orientée vers la couche centrale (8), de l'une des couches de recouvrement (6, 7).

10. Structure de coffre selon l'une des revendications précédentes, **caractérisé en ce que** la grille (9) portant la ligne de signalisation (10) est entièrement noyée dans la matière plastique expansée de la couche centrale (8).

11. Procédé de fabrication d'un élément de surface (2, 3a, 3b, 4a, 4b, 5) pour une structure de coffre (1) selon l'une des revendications précédentes, où l'élément de surface (2, 3a, 3b, 4a, 4b, 5) comprend une couche de couverture extérieure (6) associée, en utilisation, à l'environnement (U) de la structure de coffre (1), une couche de couverture intérieure (7) associée, en utilisation, à un espace de chargement (LR) délimité par la structure de coffre (1), et une couche centrale (8) entre les couches de couverture (6, 7), qui est constituée d'une matière plastique expansée, et où le procédé comprend les étapes suivantes :
a) mettre à disposition une grille (9) portant une ligne de signalisation (10) ;
b) fournir une couche de couverture (6) ;
c) optionnellement, agencer au moins un élément de fixation (12) sur la surface intérieure (13), associée à la couche centrale (8) dans l'élément de surface fini, de la couche de couverture (6) fournie ;
d) poser la grille (9) portant la ligne de signalisation (10) sur la surface intérieure, associée à la couche centrale (8) dans l'élément de surface fini, de la couche de couverture (6) fournie ;
e) optionnellement, mettre à longueur de la grille (9) à une longueur de consigne ;
f) disposer une deuxième couche de recouvrement (7) à une distance de la couche de recouvrement (6) préparée précédemment et pourvue de la grille (9) portant la ligne de signalisation (10), de sorte que la grille (9) portant la ligne de signalisation (10) est disposée dans l'espace délimité latéralement par les couches de recouvrement (6, 7)
g) introduire de la matière plastique expansée formant la couche centrale (8) dans l'espace délimité latéralement par les couches de recouvrement (6, 7).

12. Procédé selon la revendication 11, **caractérisé en ce que** la grille (9) portant la ligne de signaux (10) est mise à disposition à l'étape a) sous forme enroulée en un rouleau (R) et que poser à l'étape d) s'effectue par déroulement continu de la grille (9) du rouleau (R) le long de la surface intérieure (11) associée de la couche de recouvrement (6) préparée à l'étape b).

13. Procédé selon l'une des revendications 11 ou 12, **caractérisé en ce que** la grille (9) portant la ligne de signalisation (10) est fixée au moyen d'une colle sur la surface intérieure (11) de la couche de recouvrement (6) fournie à l'étape b).

14. Procédé selon les revendications 12 et 13, **caractérisé en ce que** la grille (9) portant la ligne de signalisation (10), après avoir été posée sur la surface intérieure (13) de la couche de couverture (6) préparée à l'étape b), est pressée au moyen d'un rouleau de pression (A) contre la surface intérieure (11) ou contre l'au moins un élément de fixation (12) disposé sur la surface intérieure (11).
